# EUROPEAN PATENT SPECIFICATION

(11) **EP 2 757 045 B1**
(45) Date of publication and mention of the grant of the patent: **13.02.2019**
(21) Application number: 13195309.3
(22) Date of filing: 02.12.2013
(51) Int. Cl.: B65B 5/10, B65B 5/12, B65G 47/14

(54) **Device for gripping and transferring individual products**
Vorrichtung zum Greifen und Transportieren von Einzelprodukten
Dispositif de préhension et de transfert de produits individuels

(30) Priority: 22.01.2013 IT TO20130052
(43) Date of publication of application: 23.07.2014
(73) Proprietor: Cavanna S.p.A., 28077 Prato Sesia (NO) (IT)
(72) Inventor: Brolli, Elio, I-28077 Prato Sesia (Novara) (IT); Parino, Dario, I-28077 Prato Sesia (Novara) (IT)
(74) Representative: Marchitelli, Mauro

(56) References cited:
- WO-A1-2007/134603

## Description

### Field of the invention

The present invention relates to the packaging of products and refers to a device for gripping and transferring individual products suitable for forming ordered groups of products from a continuous stream wherein different types of individual products are arranged randomly.

### Description of the prior art

In the packaging sector, for example of foodstuffs, it is frequently necessary to form ordered groups of products from a flow of different types of randomly arranged products. For example, the flow of individual products could be formed from different types of confectionery products that must be packaged into groups with a specific composition of different products.

For this type of application, gripping and transferring devices are used comprising a belt for advancing a continuous flow of randomly-arranged individual products, a conveyor provided with a plurality of sections on which ordered groups of products are arranged, and a plurality of manipulators programmed to pick up the individual products from the belt and to deposit the products on the sections of the conveyor in a predetermined order, so as to form a continuous succession of ordered groups of products on the conveyor.

The document EP-A-0856465 describes a device for gripping and transferring individual products, wherein the containers that receive the ordered groups of products move in a counterflow direction with respect to the movement of individual loose products. The conveyor, which transports the ordered groups of products, moves in a straight direction parallel and opposite with respect to the belt on which the individual loose products are arranged.

A drawback of the known solution from the document EP-A-0856465 consists in the fact that when the belt that transports the individual loose products has a width that is greater than the diameter of the work area of the manipulators it is necessary to have two conveyors for the ordered groups of products located on opposite sides of the belt, which requires two packaging machines, each associated with the respective conveyor of ordered groups of products.

Another drawback of this solution is that the counter-flow arrangement takes the ordered groups of products towards the source area of the individual products. In the case of biscuits or similar bakery products, the ordered groups of products to be packaged are transported towards the oven from which the individual loose products emerge. This layout complicates the arrangement of the packaging machines that carry out the packaging of the ordered groups of products.

From a layout point of view, it would be preferable for the ordered groups of products to move in the same direction of transport as the individual loose products. However, this arrangement is not stable to the variations in flow rate of the individual loose products, given that the manipulators which have the fewest number of individual loose products available are located in zones of the conveyor that have fewer vacant positions for the ordered groups of products.

The document EP-A-2233400 describes a device for gripping and transferring individual products wherein the conveyor for the ordered groups of products moves in concordant flow with respect to the advancing direction of the individual loose products. In this case, to avoid instability problems, buffers are provided on which the manipulators deposit the excess individual products during the instances wherein there are no vacant positions on the conveyor for the ordered groups of products. The manipulators are programmed to pick up the individual products from the buffers and place them in the vacant positions of the conveyor during the instances wherein there are vacant positions available for the ordered groups of products on the conveyor.

A drawback of this solution is that the products that are provisionally arranged on the buffers are collected and deposited twice, which increases the risk of damage to the products, especially in the case of delicate products.

The document WO2007/134603 describes a packaging device comprising a device for gripping and transferring individual products according to the preamble of claim 1 and claim 4, including a feed conveyor, a plurality of closed-loop conveyors and a plurality of manipulators associated with respective closed-loop conveyors, wherein each manipulator has a work area corresponding to the shape and size of the respective closed-loop conveyor. The closed-loop conveyors with the respective manipulators are arranged in series between each other along the feed conveyor. The manipulators pick up the products from the feed conveyor and place them on empty trays located on the closed-loop conveyors. The filled trays are transferred from the closed-loop conveyor onto a common output conveyor.

The drawback of the device described in the document WO2007/134603 is that the solution wherein each manipulator is associated with a respective closed-loop conveyor requires the device to be very long, especially in the case of small products that are fed with a high flow-rate, such as confectionery products and the like. Moreover, this solution is difficult to adapt to cases wherein the feed conveyor has a width greater than the work diameter of the manipulators. The commercial manipulators used for gripping and positioning of products can have a maximum work diameter of 1600 mm while the conveyor belts used for the transport of confectionery products, for example at the output of an oven, can have a width of 2000 mm and above.

### Object and summary of the invention

The present invention aims to provide a device for gripping and transferring individual products that overcomes the problems of the prior art.

According to the present invention, this object is achieved by a device having the characteristics forming the subject of claim 1 or of claim 4.

Preferred embodiments of the present invention are the subject of the dependent claims.

The claims form an integral part of the disclosure provided in relation to the invention.

### Brief description of the drawings

The present invention will now be described in detail with reference to the attached drawings, provided purely by way of non-limiting example, wherein:
- Figure 1 is a perspective view of a first embodiment of a device according to the present invention,
- Figures 2 and 3 are a plan view and a side elevation view, respectively, of the device of Figure 1,
- Figure 4 is a perspective view of a second embodiment of a device according to the present invention,
- Figures 5 and 6 are a plan view and a side elevation view, respectively, of the device of Figure 4.
- Figure 7 is a perspective view of a device, which is not part of the present invention, a
- Figure 8 is a plan view of the device of Figure 7,
- Figure 9 is a detail in plan view showing a variant of the device of Figure 8, and
- Figure 10 is a plan view of a third embodiment of the present invention.

### Detailed description of embodiments of the invention

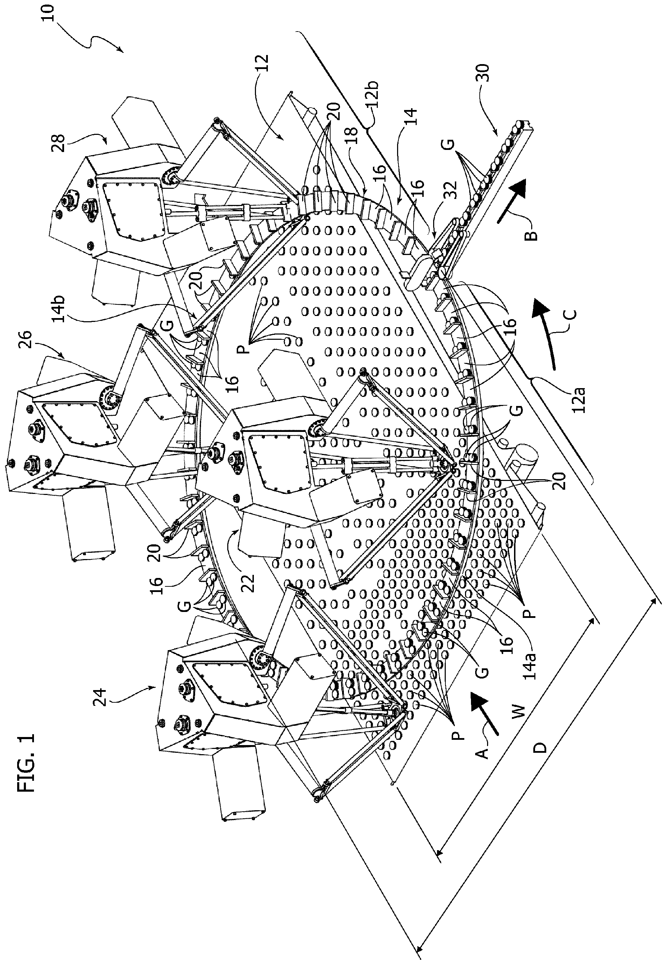

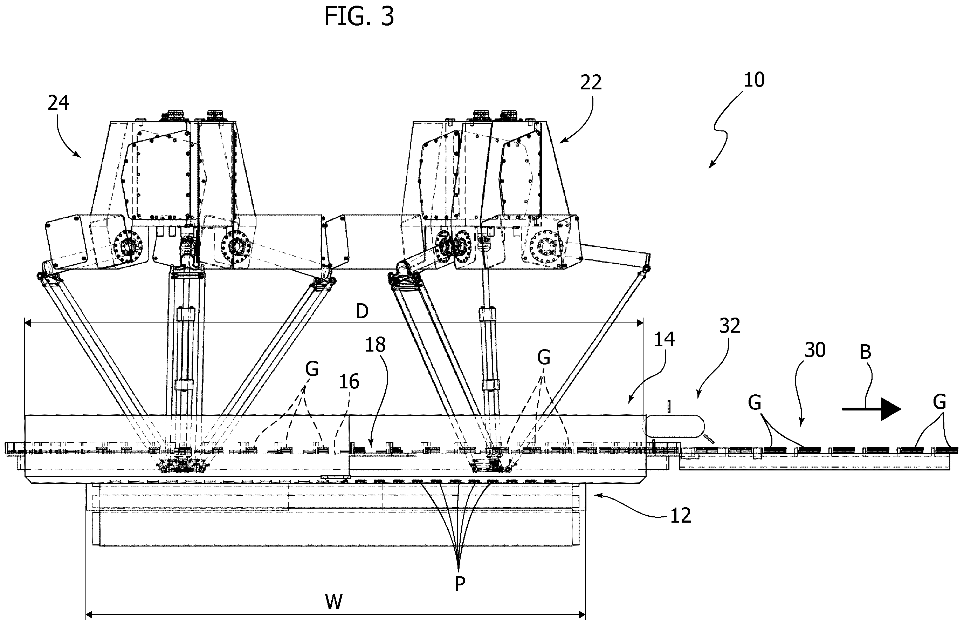

With reference to Figures 1 to 3, numeral 10 indicates a first embodiment of a device for gripping and transferring individual products according to the present invention. The device 10 comprises a feed conveyor 12 moving in the direction indicated by the arrow A. Individual loose products P are randomly arranged on the feed conveyor 12.

In the example illustrated in the figures, the feed conveyor 12 is formed by a conveyor belt with a horizontal upper branch, having a width W. The feed conveyor 12 has an upstream zone 12a and a downstream zone 12b.

The device 10 comprises a closed-loop conveyor 14 having a plurality of movable positions 16 configured to receive ordered groups G of products

The closed-loop conveyor 14 extends along a closed-loop path in a horizontal plane. The closed-loop path extends at least partially above the belt 12. The closed-loop conveyor 14 has an upstream branch 14a located in the area of the upstream zone 12a of the feed conveyor 12 and a downstream branch 14b located in the area of the downstream zone 12b of the feed conveyor 12.

In the embodiment illustrated in Figures 1 to 3, the closed-loop conveyor 14 comprises an annular ring 18 extending in a horizontal plane and rotatably supported about a vertical axis. The ring 18 is driven into rotation in the direction C by means of a motor controlled by an electronic control unit. The ring 18 is equipped with a plurality of pushers 20, for example in the shape of vertical tabs, that define sectors of ring between them, forming the movable positions 16 configured to receive respective ordered groups G of products. The movable positions 16 of the closed-loop conveyor 14 could receive containers in which the ordered groups of products G are arranged in an orderly way. The annular ring 18 has a diameter D greater than the width W of the feed conveyor 12.

The device 10 comprises at least one upstream manipulator and at least one downstream manipulator controlled independently from each other and having respective work areas that cover at least a part of the upstream branch 14a and at least a part of the downstream branch 14b of the closed-loop conveyor 14.

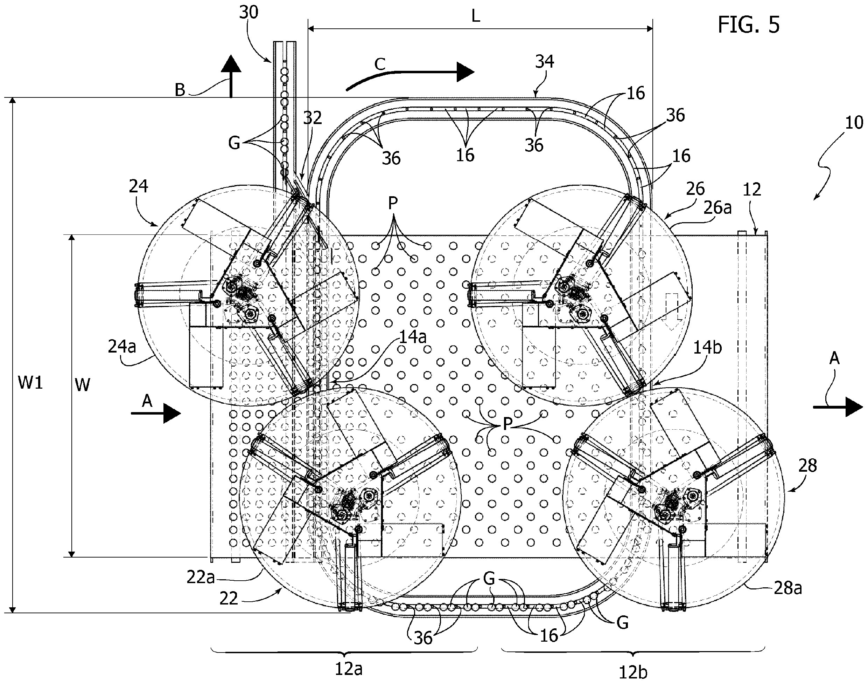

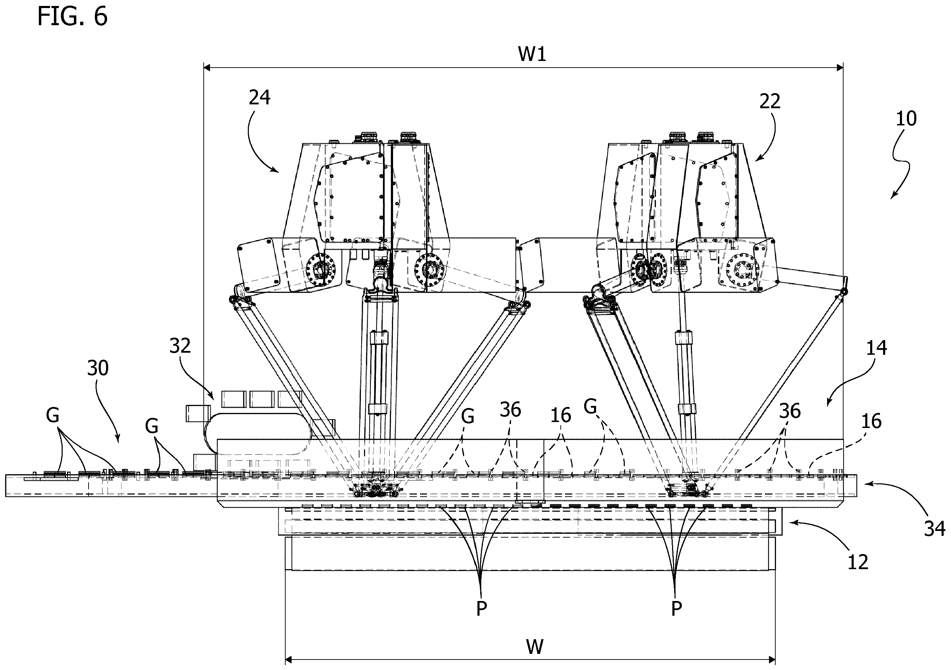

In the embodiments illustrated in Figures 1 to 6 two upstream manipulators 22, 24, and two downstream manipulators 26, 28 are provided. The manipulators 22, 24, 26, 28 are associated with display devices that facilitate recognition of the type and possibly the orientation of the individual products P, so as to allow the formation of ordered groups G of products on the movable positions 16 with a specific composition and possibly with a specific orientation of the different products P.

The upstream manipulators 22, 24 are arranged to pick up products P from the upstream zone 12a of the feed conveyor 12 and to position the products P on free movable positions 16 of the upstream branch 14a of the closed-loop conveyor 14. The downstream manipulators 26, 28 are arranged to pick up products P in the downstream zone 12b of the feed conveyor 12 and to deposit them on free movable positions 16 of the downstream branch 14b of the closed-loop conveyor 14.

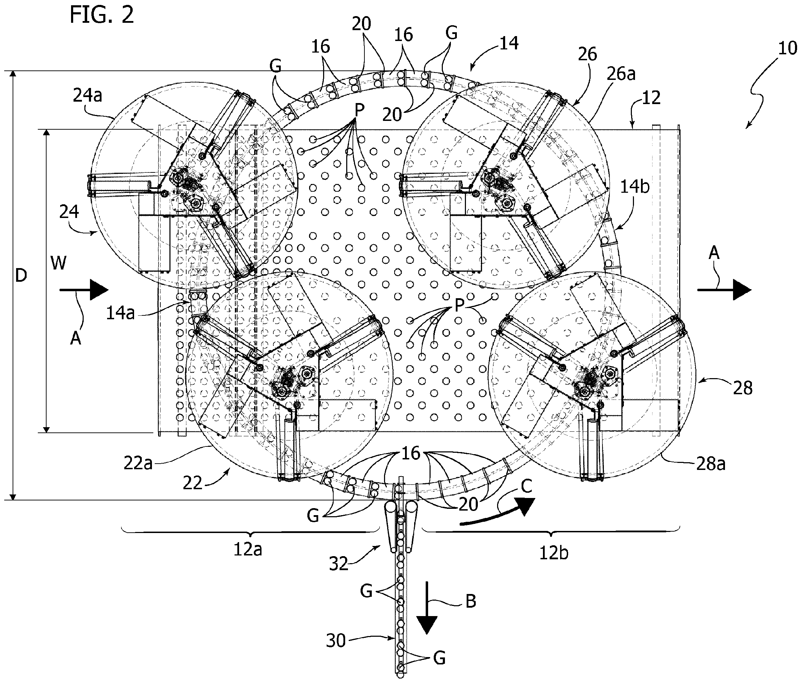

In Figure 2 the work areas 22a, 24a, 26a, 28a of the respective manipulators 22, 24, 26, 28 are indicated. According to the invention, the work areas have a circular form with a diameter that is less than the width W of the feed conveyor 12. The upstream manipulators 22, 24, are arranged so as to cover the entire width of the feed conveyor 12 with their respective work areas 22a, 24a in the upstream zone 12a and at least a part of the upstream branch 14a of the closed-loop conveyor 14. The downstream manipulators 26, 28, are arranged so as to cover the entire width of the feed conveyor 12 with their respective work areas 26a, 28a in the downstream zone 12b and at least a part of the downstream branch 14b of the closed-loop conveyor 14. The diameter D of the closed-loop conveyor 14 is greater than the diameter of the work area 22a, 24a, 26a, 28a of each manipulator 22, 24, 26, 28.

The device 10 comprises an output conveyor 30, which receives a continuous succession of ordered groups G of products from the closed-loop conveyor 14 and feeds the ordered groups G of products to a packaging machine. The output conveyor 30 is preferably a straight conveyor including, for example, a straight guide and a chain configured to advance the ordered groups G of products along the guide.

The device 10 also comprises a transfer device 32, which transfers the ordered groups G of products from the movable positions 16 of the conveyor 14 onto the output conveyor 30. The transfer device 32 can be formed by a closed-loop chain or belt equipped with vanes that transfer the ordered groups G of products along a radial direction from the movable position 16, which in turn is positioned alongside the transfer device 32. On the output conveyor 30, a continuous succession of ordered groups G of products is formed, movable along a straight direction B.

During operation, the closed-loop conveyor 14 rotates in the direction indicated by the arrow C at a controlled speed as a function of the flow of individual loose products P on the belt 12.

The direction of movement C of the closed-loop conveyor 14 is such that the movable positions 16 of the closed-loop conveyor 14, downstream of the transfer device 32, first pass through the work areas 28a, 26a of the downstream manipulators 28, 26, and thereafter, the work areas 24a, 22a of the upstream manipulators 24, 22. In this way, as is visible in Figures 1 and 2, the downstream manipulators 26, 28 have a lower density of individual products P available in their respective work areas 26a, 28a and a greater number of free movable positions 16. On the other hand, the upstream manipulators 22, 24 have a greater density of individual products P available in their respective work areas 22a, 24a and a decreased availability of free movable positions 16.

This arrangement, from a functional point of view, has the same advantages of a device with an output conveyor arranged in counterflow with respect to the feed conveyor, since it maximizes the possibility of filling the movable positions 16 with the predetermined combination of products P, even in the presence of an uneven or unbalanced feed flow. The arrangement according to the invention is more compact with respect to the case wherein the manipulators are aligned with each other in the transport direction, and allows the transfer of the ordered groups of products onto a single output conveyor even when the width W of the feed conveyor is greater than the maximum work diameter of the commercially available manipulators.

The speed of the closed-loop conveyor 14 can be decreased during the instances where there is a lower flow of individual products P or increased during the instances with a greater flow of individual products P. The speed of the output conveyor 30 and the transfer device 32 are coordinated with the speed of the closed-loop conveyor 14.

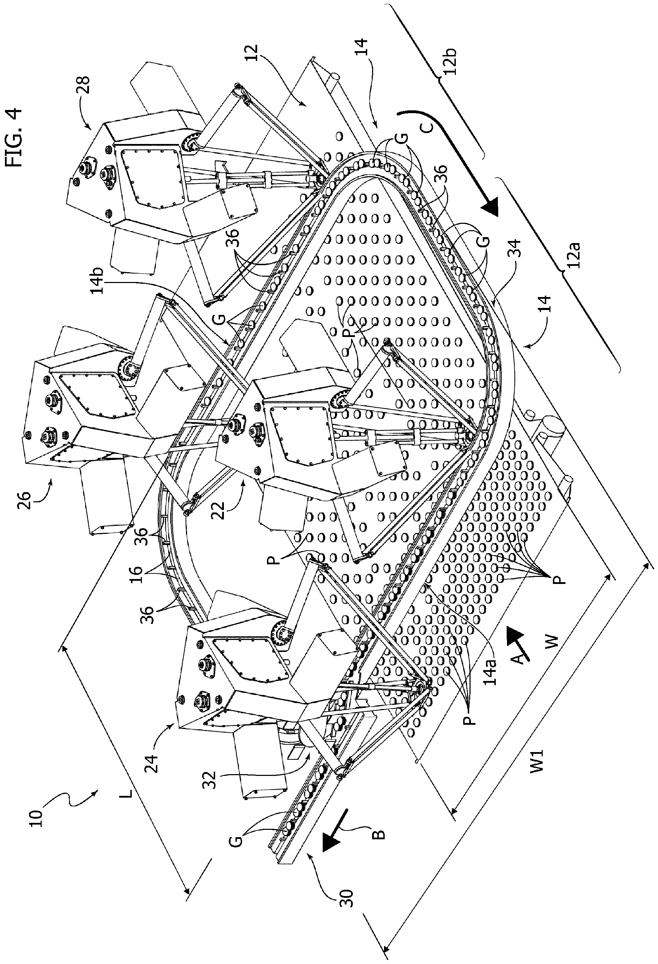

In Figures 4 to 6 a second embodiment of the device according to the present invention is illustrated. The elements corresponding to those previously described are indicated by the same reference numerals. In this second embodiment a closed-loop conveyor 14 is also envisaged which extends over a closed-loop path in a horizontal plane. In this variant, the conveyor 14 comprises a stationary closed-loop guide 34 along which a flexible transport element is movable, such as a chain or belt carrying a plurality of vertical pushers 36, which push the ordered groups G of products along the guide 34. In this case, the closed-loop conveyor 14 also comprises a plurality of movable positions 16 for the ordered groups G of products, formed by the space located between two adjacent pushers 36.

The closed-loop conveyor 14 has a width W1 and a length L. The width W1 is greater than the width W of the feed conveyor 12. The length L is greater than the diameter of the work area 22a, 24a, 26a, 28a of each manipulator 22, 24, 26, 28.

In the embodiment of Figure 4, a transfer device 32 may also be provided which transfers the ordered groups G of products onto an output conveyor 30, which extends along a straight direction and feeds a packaging machine with a continuous succession of ordered groups G of products.

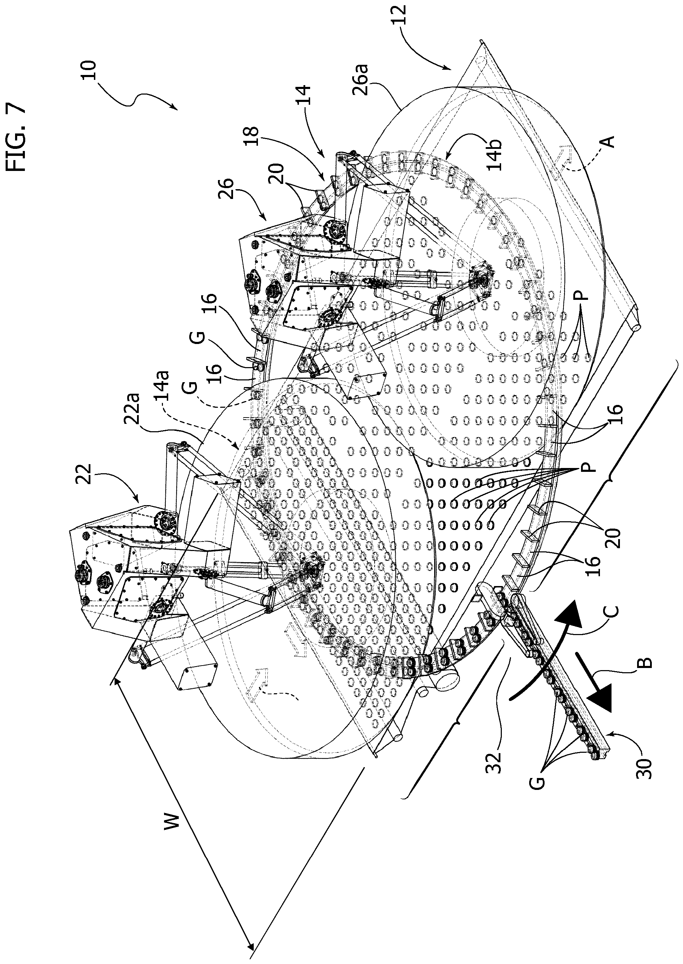

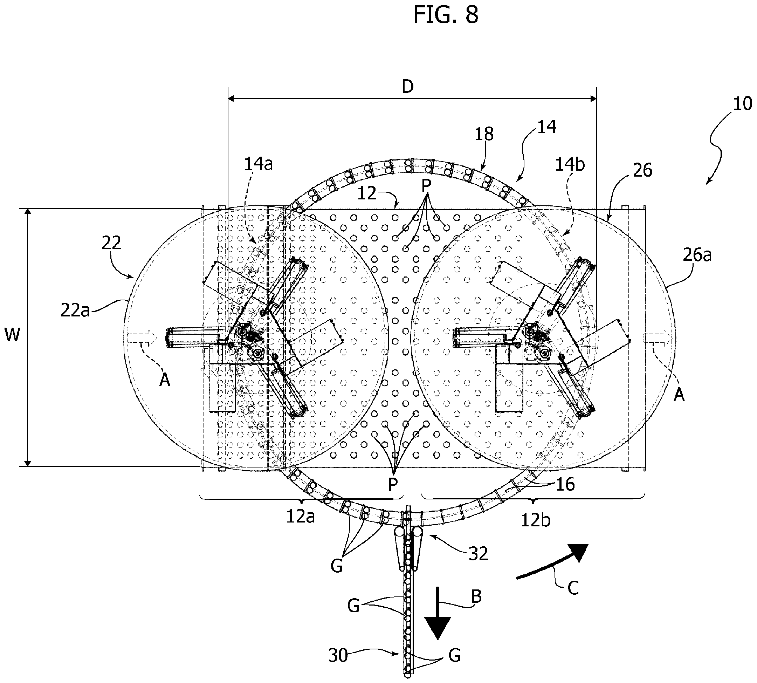

In Figures 7 and 8 a device, which is not part of the present invention, is illustrated, in which a single upstream manipulator 22 and a single downstream manipulator 26 are envisaged. In the example of Figures 7 and 8 the manipulators 22, 26 have respective work areas 22a, 26a with a diameter essentially equal to the width W of the feed conveyor 12. The work areas 22a, 26a both cover the entire width of the feed conveyor. The work areas 22a, 26a respectively cover at least a part of the upstream branch 14a and at least a part of the downstream branch 14b of the closed-loop conveyor 14.

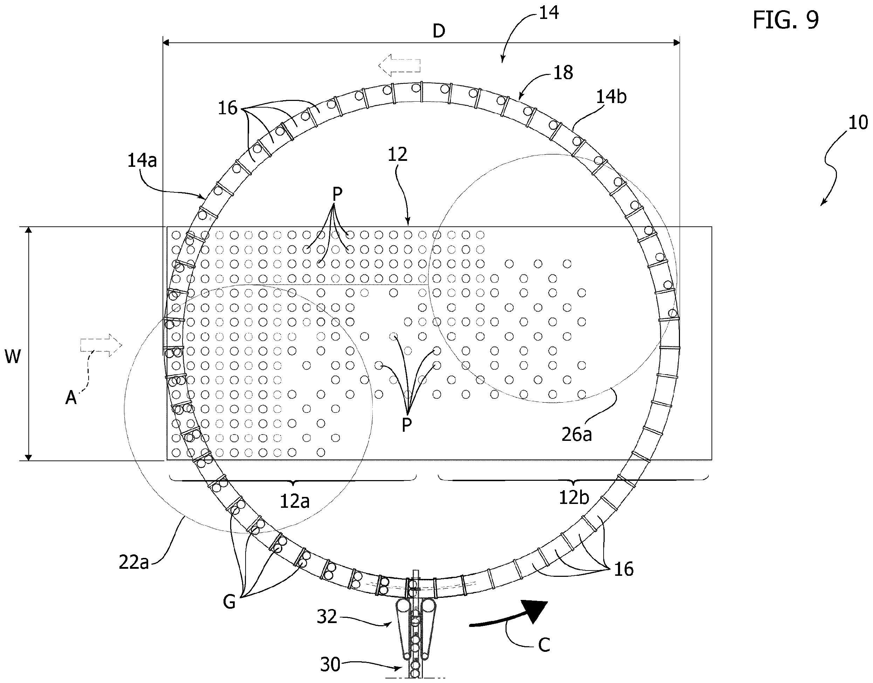

In the variant illustrated in Figure 9 a single upstream manipulator 22 and a single downstream manipulator 26 are envisaged, as in the example of Figures 7 and 8. In this case the work areas 22a, 26a of the upstream manipulator 22 and of the downstream manipulator 26 have a diameter less than the width W of the feed conveyor 12. The work area 22a of the upstream manipulator 22 and the work area 26a of the downstream manipulator 26 are offset from one another so that together they cover the entire width W of the feed conveyor.

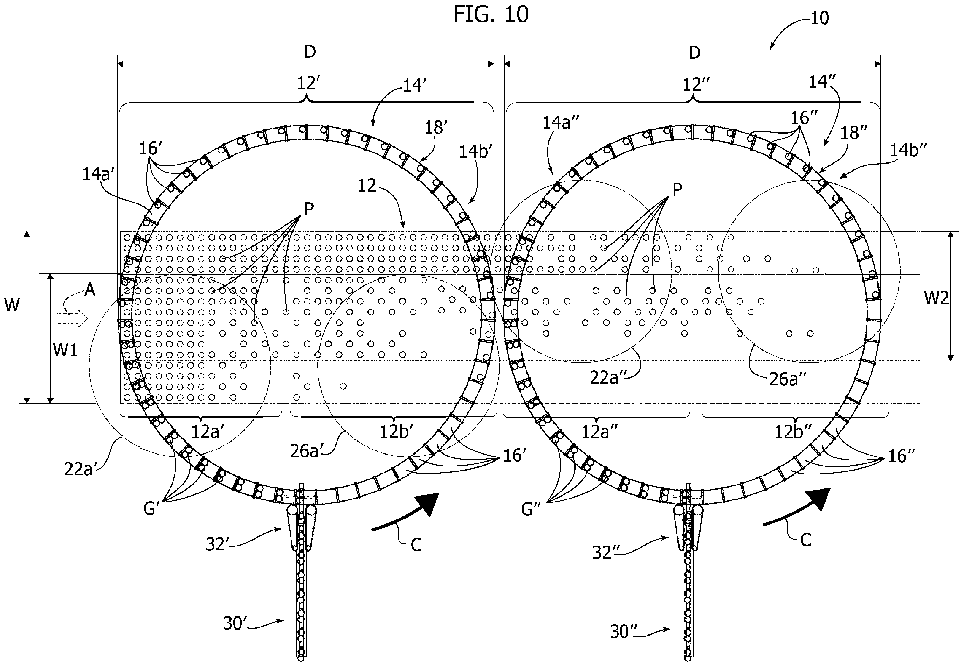

Figure 10 illustrates a third embodiment of a device for gripping and transferring individual products according to the present invention. In this case as well a feed conveyor 12, movable in the direction indicated by arrow A, is provided, on which individual loose products P are arranged.

In this third embodiment, the device 10 comprises a first closed-loop conveyor 14' that covers a first longitudinal zone 12' of the feed conveyor 12, and a second closed-loop conveyor 14" that covers a second longitudinal zone 12" of the feed conveyor 12. Each closed-loop conveyor 14', 14" has a plurality of movable positions 16', 16" configured for receiving respective ordered groups of products G', G".

The first closed-loop conveyor 14' has a first upstream branch 14a' located in the area of a first upstream zone 12a' of the feed conveyor 12 and a first downstream branch 14b' located in the area of a first downstream zone 12b' of the feed conveyor 12. The second closed-loop conveyor 14" has a second upstream branch 14a" located in the area of a second upstream zone 12a" of the feed conveyor 12 and a second downstream branch 14b" located in the area of a second downstream zone 12b" of the feed conveyor 12.

In the embodiment illustrated in Figure 10, the first and the second closed-loop conveyors 14', 14" comprise respective annular rings 18', 18" rotatably supported about respective vertical axes and rotationally driven in the direction indicated by the arrows C, by means of respective motors controlled by an electronic control unit. Both annular rings 18', 18" have a diameter D greater than the width W of the feed conveyor 12.

The device 10 comprises a first upstream manipulator and a first downstream manipulator having respective first work areas 22a' and 26a' that cover a part of the upstream branch 14a' and a part of the downstream branch 14b' of the first closed-loop conveyor 14' and a second upstream manipulator and a second downstream manipulator having respective second work areas 22a" and 26a" that cover part of the upstream branch 14a" and a part of the downstream branch 14b" of the second closed-loop conveyor 14".

The first work areas 22a' and 26a' cover, in a transverse direction, a first transverse area W1 of the feed conveyor 12 and the second work areas 22a" and 26a" cover, in a transverse direction, a second transverse area W2of the feed conveyor 12. The first and second work areas 22a', 26a' and 22a", 26a" together cover the entire width W of the feed conveyor (12).

It is also possible to envisage more than two closed-loop conveyors, with the manipulators associated with each closed-loop conveyor that cover respective longitudinal strips of the feed conveyor 12, and with the manipulators of all the closed-loop conveyors together covering the entire width of the feed conveyor.

The solution shown in Figure 10 is useful at least in the following cases:
1) The feed transport 12 is narrow and very crowded with products; therefore, it is not possible to arrange two manipulators side by side as in the embodiments of Figures 1-6, and a single manipulator does not have a sufficient speed to pick up all the products
2) The requirements of the layout necessitate the production of a closed-loop conveyor with a small diameter;
3) There are limits on the speed of the packaging machines downstream of the output conveyor (for example when using a packaging film difficult to weld) so that two packaging machines fed by two closed-loop conveyors are used;
4) It is possible, for example, to have feed conveyors divided in the belt direction that transport different products that must be transported to different packaging machines.

Of course, without prejudice to the principle of the invention, the details of construction and the embodiments may vary widely with respect to those described and illustrated without departing from the scope of the invention as defined by the claims that follow.

## Claims

1. Device for gripping and transferring individual products (P), comprising:
- a feed conveyor (12) arranged to advance a flow of individual products (P) along a straight direction of advancement (A) from an upstream zone (12a) to a downstream zone (12b),
- at least one closed-loop conveyor (14) having a plurality of movable positions (16) configured for receiving respective ordered groups (G) of products and movable along a closed-loop path, the closed-loop conveyor (14) having an upstream branch (14a) and a downstream branch (14b) located in the area of the upstream zone (12a) and the downstream zone (12b) of the feed conveyor (12), respectively,
- an output conveyor (30) configured to receive a succession of ordered groups (G) of products from said closed-loop conveyor (14),
- a transfer device (32) configured to transfer said ordered groups of products (G) from said movable positions (16) of the closed-loop conveyor (14) to said output conveyor (30),
**characterized in that** the device comprises at least one upstream manipulator (22, 24) and at least one downstream manipulator (26, 28), controlled independently from each other, and having respective work areas (22a, 24a, 26a, 28a), which cover, respectively, at least a part of the upstream branch (14a) and at least a part of the downstream branch (14b) of the closed-loop conveyor (14),
wherein, in operation, said movable positions (16) of the closed-loop conveyor (14) move in a direction (C) such that the movable positions (16) downstream of the transfer device (32) first pass through the work areas (26a, 28a) of said at least one downstream manipulator (26, 28) and thereafter the work areas (22a, 24a) of said at least one upstream manipulator (22, 24), and **in that** the work areas (22a, 26a) of said at least one upstream manipulator (22) and of said at least one downstream manipulator (26) have a diameter less than the width (W) of said feed conveyor (12), wherein the work area (22a) of the upstream manipulator (22) and the work area (26a) of the downstream manipulator (26) are offset from one another so that together they cover the entire width (W) of the feed conveyor (12).

2. Device according to claim 1, comprising a single upstream manipulator (22) and a single downstream manipulator (26).

3. Device according to claim 1, comprising two or more upstream manipulators (22, 24) having respective work areas (22a, 24a) that together cover the entire width (W) of the feed conveyor (12) in the upstream zone (12a) and two or more downstream manipulators (26, 28) having respective work areas (26a, 28a) that together cover the entire width (W) of the feed conveyor (12) in the downstream zone (12b).

4. Device for gripping and transferring individual products (P), comprising:
- a feed conveyor (12) arranged to advance a flow of individual products (P) along a straight direction of advancement (A) from an upstream zone (12a) to a downstream zone (12b),
- a plurality of closed-loop conveyors (14', 14") each of which covers a respective longitudinal area (12', 12") of the feed conveyor (12), each closed-loop conveyors (14', 14") having a plurality of movable positions (16', 16'') configured for receiving respective ordered groups (G) of products and movable along a closed-loop path, and each closed-loop conveyor (14', 14'') having an upstream branch (14a', 14a'') and a downstream branch (14b', 14b'') located in the area of the upstream zone (12a', 12a'') and the downstream zone (12b', 12b'') of the feed conveyor (12), respectively,
- a plurality of output conveyors (30', 30''), each output conveyor (30', 30'') being configured to receive a succession of ordered groups (G) of products from a respective closed-loop conveyor (14', 14''), and
- a plurality of transfer devices (32', 32''), each transfer device (32', 32'') being configured to transfer said ordered groups of products (G) from said movable positions (16', 16'') of a respective closed-loop conveyor (14', 14'') to the respective output conveyor (30', 30''),
**characterized in that** each closed-loop conveyor (14', 14") is associated with at least one upstream manipulator and at least one downstream manipulator having respective work areas (22a', 26a', 22a", 26a") that cover a part of an upstream branch (14a', 14a") and a part of a downstream branch (14b', 14b") of the respective closed-loop conveyor (14', 14"), wherein, in operation, said movable positions (16', 16'') of each closed-loop conveyor (14', 14'') move in a direction (C) such that the movable positions (16', 16'') downstream of the respective transfer device (32', 32'') first pass through the work areas (26a', 26a'') of the respective at least one downstream manipulator and thereafter the work areas (22a', 22a'') of the respective at least one upstream manipulator, and wherein the work areas (22a', 26a', 22a", 26a") of the manipulators associated with each closed-loop conveyor (14', 14") cover a respective transverse areas in the transverse direction (W1, W2) of the feed conveyor (12) and wherein said work areas (22a', 26a', 22a", 26a") together cover the entire width (W) of the feed conveyor (12).

5. Device according to any one of the preceding claims, wherein said closed-loop conveyor (14) comprises an annular ring (18) rotatably mounted about a vertical axis and provided with a plurality of sectors defining said movable positions (16).

6. Device according to claim 5, wherein said annular ring (18) is provided with a plurality of pushers (20) which extend in the vertical direction and which define between them said movable positions (16).

7. Device according to any of the claims 1-4, wherein said closed-loop conveyor (14) comprises a stationary guide (34) which extends along a closed-loop path and carries a movable flexible element provided with a plurality of pushers (36) defining between them said movable positions (16).

## Patentansprüche

1. Einrichtung zum Greifen und Übergeben einzelner Produkte (P), umfassend:
- einen Zuführförderer (12), der eingerichtet ist, einen Strom aus einzelnen Produkten (P) entlang einer geraden Beförderungsrichtung (A) von einer stromaufwärts gelegenen Zone (12a) zu einer stromabwärts gelegenen Zone (12b) zu befördern,
- mindestens einen Endlosförderer (14), der eine Vielzahl bewegbarer Positionen (16) aufweist, die dafür ausgelegt sind, jeweilige geordnete Gruppen (G) aus Produkten aufzunehmen, und die entlang einer Endlosbahn bewegbar sind, wobei der Endlosförderer (14) ein stromaufwärts gelegenes Teilstück (14a) und ein stromabwärts gelegenes Teilstück (14b) aufweist, die sich im Bereich der stromaufwärts gelegenen Zone (12a) bzw. der stromabwärts gelegenen Zone (12b) des Zuführförderers (12) befinden,
- einen Ausgabeförderer (30), der dafür ausgelegt ist, eine Abfolge geordneter Gruppen (G) aus Produkten von dem Endlosförderer (14) aufzunehmen,
- eine Übergabeeinrichtung (32), die dafür ausgelegt ist, die geordneten Gruppen aus Produkten (G) von den bewegbaren Positionen (16) des Endlosförderers (14) an den Ausgabeförderer (30) zu übergeben,
**dadurch gekennzeichnet, dass** die Einrichtung mindestens einen stromaufwärts gelegenen Manipulator (22, 24) und mindestens einen stromabwärts gelegenen Manipulator (26, 28) umfasst, die unabhängig voneinander gesteuert sind und jeweilige Arbeitsbereiche (22a, 24a, 26a, 28a) aufweisen, die zumindest einen Teil des stromaufwärts gelegenen Teilstücks (14a) bzw. zumindest einen Teil des stromabwärts gelegenen Teilstücks (14b) des Endlosförderers (14) abdecken,
wobei sich im Betrieb die bewegbaren Positionen (16) des Endlosförderers (14) in einer Richtung (C) derart bewegen, dass die bewegbaren Positionen (16) stromabwärts der Übergabeeinrichtung (32) zunächst die Arbeitsbereiche (26a, 28a) des mindestens einen stromabwärts gelegenen Manipulators (26, 28) und anschließend die Arbeitsbereiche (22a, 24a) des mindestens einen stromaufwärts gelegenen Manipulators (22, 24) durchlaufen, und dass die Arbeitsbereiche (22a, 26a) des mindestens einen stromaufwärts gelegenen Manipulators (22) und des mindestens einen stromabwärts gelegenen Manipulators (26) einen Durchmesser aufweisen, der kleiner ist als die Breite (W) des Zuführförderers (12), wobei der Arbeitsbereich (22a) des stromaufwärts gelegenen Manipulators (22) und der Arbeitsbereich (26a) des stromabwärts gelegenen Manipulators (26) so zueinander versetzt sind, dass sie zusammen die gesamte Breite (W) des Zuführförderers (12) abdecken.

2. Einrichtung nach Anspruch 1, umfassend einen einzigen stromaufwärts gelegenen Manipulator (22) und einen einzigen stromabwärts gelegenen Manipulator (26).

3. Einrichtung nach Anspruch 1, umfassend zwei oder mehr stromaufwärts gelegene Manipulatoren (22, 24), die jeweilige Arbeitsbereiche (22a, 24a) aufweisen, die zusammen die gesamte Breite (W) des Zuführförderers (12) in der stromaufwärts gelegenen Zone (12a) abdecken, und zwei oder mehr stromabwärts gelegene Manipulatoren (26, 28), die jeweilige Arbeitsbereiche (26a, 28a) aufweisen, die zusammen die gesamte Breite (W) des Zuführförderers (12) in der stromabwärts gelegenen Zone (12b) abdecken.

4. Einrichtung zum Greifen und Übergeben einzelner Produkte (P), umfassend:
- einen Zuführförderer (12), der eingerichtet ist, einen Strom aus einzelnen Produkten (P) entlang einer geraden Beförderungsrichtung (A) von einer stromaufwärts gelegenen Zone (12a) zu einer stromabwärts gelegenen Zone (12b) zu befördern,
- eine Vielzahl von Endlosförderern (14', 14"), die jeweils einen jeweiligen Längsbereich (12', 12") des Zuführförderers (12) abdecken, wobei jeder Endlosförderer (14', 14") eine Vielzahl bewegbarer Positionen (16', 16") aufweist, die dafür ausgelegt sind, jeweilige geordnete Gruppen (G) aus Produkten aufzunehmen, und die entlang einer Endlosbahn bewegbar sind, und wobei jeder Endlosförderer (14', 14") ein stromaufwärts gelegenes Teilstück (14a', 14a") und ein stromabwärts gelegenes Teilstück (14b', 14b") aufweist, die sich im Bereich der stromaufwärts gelegenen Zone (12a', 12a") bzw. der stromabwärts gelegenen Zone (12b', 12b") des Zuführförderers (12) befinden,
- eine Vielzahl von Ausgabeförderern (30', 30"), wobei jeder Ausgabeförderer (30', 30") dafür ausgelegt ist, eine Abfolge geordneter Gruppen (G) aus Produkten von einem jeweiligen Endlosförderer (14', 14") aufzunehmen, und
- eine Vielzahl von Übergabeeinrichtungen (32', 32"), wobei jede Übergabeeinrichtung (32', 32") dafür ausgelegt ist, die geordneten Gruppen aus Produkten (G) von den bewegbaren Positionen (16', 16") eines jeweiligen Endlosförderers (14', 14") an den jeweiligen Ausgabeförderer (30', 30") zu übergeben,
**dadurch gekennzeichnet, dass** jeder Endlosförderer (14', 14") mindestens einem stromaufwärts gelegenen Manipulator und mindestens einem stromabwärts gelegenen Manipulator zugeordnet ist, die jeweilige Arbeitsbereiche (22a', 26a', 22a", 26a") aufweisen, die einen Teil eines stromaufwärts gelegenen Teilstücks (14a', 14a") bzw. einen Teil eines stromabwärts gelegenen Teilstücks (14b', 14b") des jeweiligen Endlosförderers (14', 14") abdecken, wobei sich im Betrieb die bewegbaren Positionen (16', 16") jedes Endlosförderers (14', 14") in einer Richtung (C) derart bewegen, dass die bewegbaren Positionen (16', 16") stromabwärts der jeweiligen Übergabeeinrichtung (32', 32") zunächst die Arbeitsbereiche (26a', 26a") des jeweiligen mindestens einen stromabwärts gelegenen Manipulators und anschließend die Arbeitsbereiche (22a', 22a") des jeweiligen mindestens einen stromaufwärts gelegenen Manipulators durchlaufen, und wobei die Arbeitsbereiche (22a', 26a', 22a", 26a") der jedem Endlosförderer (14', 14") zugeordneten Manipulatoren einen jeweiligen Querbereich in der Querrichtung (W1, W2) des Zuführförderers (12) abdecken und wobei die Arbeitsbereiche (22a', 26a', 22a", 26a") zusammen die gesamte Breite (W) des Zuführförderers (12) abdecken.

5. Einrichtung nach einem der vorhergehenden Ansprüche, wobei der Endlosförderer (14) einen Kreisring (18) umfasst, der um eine vertikale Achse drehbar gelagert ist und mit einer Vielzahl die bewegbaren Positionen (16) definierender Sektoren versehen ist.

6. Einrichtung nach Anspruch 5, wobei der Kreisring (18) mit einer Vielzahl von Mitnehmern (20) versehen ist, die sich in der Vertikalrichtung erstrecken und zwischen sich die bewegbaren Positionen (16) definieren.

7. Einrichtung nach einem der Ansprüche 1 bis 4, wobei der Endlosförderer (14) eine stationäre Führung (34) umfasst, die sich entlang einer Endlosbahn erstreckt und ein bewegbares biegsames Element trägt, das mit einer Vielzahl von Mitnehmern (36) versehen ist, die zwischen sich die bewegbaren Positionen (16) definieren.

## Revendications

1. Dispositif de saisie et de transfert de produits individuels (P), comprenant :
- un convoyeur d'alimentation (12) agencé pour faire avancer un flux de produits individuels (P) le long d'une direction droite d'avancement (A) d'une zone amont (12a) à une zone aval (12b),
- au moins un convoyeur en boucle fermée (14) ayant une pluralité de positions mobiles (16) configurées pour recevoir des groupes ordonnés respectifs (G) de produits et mobiles le long d'un chemin en boucle fermée, le convoyeur en boucle fermée (14) ayant une branche amont (14a) et une branche aval (14b) situées dans la région de la zone amont (12a) et de la zone aval (12b) du convoyeur d'alimentation (12), respectivement,
- un convoyeur de sortie (30) configuré pour recevoir une succession de groupes ordonnés (G) de produits provenant dudit convoyeur en boucle fermée (14),
- un dispositif de transfert (32) configuré pour transférer lesdits groupes ordonnés de produits (G) desdites positions mobiles (16) du convoyeur en boucle fermée (14) audit convoyeur de sortie (30),
**caractérisé en ce que** le dispositif comprend au moins un dispositif de manipulation amont (22, 24) et au moins un dispositif de manipulation aval (26, 28), commandés indépendamment l'un de l'autre, et ayant des régions de travail respectives (22a, 24a, 26a, 28a) qui couvrent, respectivement, au moins une partie de la branche amont (14a) et au moins une partie de la branche aval (14b) du convoyeur en boucle fermée (14),
dans lequel, en fonctionnement, lesdites positions mobiles (16) du convoyeur en boucle fermée (14) se déplacent dans une direction (C) de sorte que les positions mobiles (16) en aval du dispositif de transfert (32) passent d'abord par la région de travail (26a, 28a) dudit au moins un dispositif de manipulation aval (26, 28) et ensuite par les régions de travail (22a, 24a) dudit au moins un dispositif de manipulation amont (22, 24), et **en ce que** les régions de travail (22a, 26a) dudit au moins un dispositif de manipulation amont (22) et dudit au moins un dispositif de manipulation aval (26) ont un diamètre inférieur à la largeur (W) dudit convoyeur d'alimentation (12), où la région de travail (22a) du dispositif de manipulation amont (22) et la région de travail (26a) du dispositif de manipulation aval (26) sont décalées l'une par rapport à l'autre de sorte qu'elles couvrent ensemble toute la largeur (W) du convoyeur d'alimentation (12).

2. Dispositif selon la revendication 1,
comprenant un seul dispositif de manipulation amont (22) et un seul dispositif de manipulation aval (26).

3. Dispositif selon la revendication 1,
comprenant deux dispositifs de manipulation amont ou plus (22, 24) ayant des régions de travail respectives (22a, 24a) qui couvrent ensemble toute la largeur (W) du convoyeur d'alimentation (12) dans la zone amont (12a) et deux dispositifs de manipulation aval ou plus (26, 28) ayant des régions de travail respectives (26a, 28a) qui couvrent ensemble toute la largeur (W) du convoyeur d'alimentation (12) dans la zone aval (12b).

4. Dispositif de saisie et de transfert de produits individuels (P), comprenant :
- un convoyeur d'alimentation (12) agencé pour faire avancer un flux de produits individuels (P) le long d'une direction droite d'avancement (A) d'une zone amont (12a) à une zone aval (12b),
- une pluralité de convoyeurs en boucle fermée (14', 14") dont chacun couvre une région longitudinale respective (12', 12") du convoyeur d'alimentation (12), chaque convoyeur en boucle fermée (14', 14") ayant une pluralité de positions mobiles (16', 16") configurées pour recevoir des groupes ordonnés respectifs (G) de produits et mobiles le long d'un chemin en boucle fermée, et chaque convoyeur en boucle fermée (14', 14") ayant une branche amont (14a', 14a") et une branche aval (14b', 14b") situées dans la région de la zone amont (12a', 12a") et de la zone aval (12b', 12b") du convoyeur d'alimentation (12), respectivement,
- une pluralité de convoyeurs de sortie (30', 30"), chaque convoyeur de sortie (30', 30") étant configuré pour recevoir une succession de groupes ordonnés (G) de produits provenant d'un convoyeur en boucle fermée respectif (14', 14"), et
- une pluralité de dispositifs de transfert (32', 32"), chaque dispositif de transfert (32', 32") étant configuré pour transférer lesdits groupes ordonnés de produits (G) desdites positions mobiles (16', 16") d'un convoyeur en boucle fermée respectif (14', 14") au convoyeur de sortie respectif (30', 30"),
**caractérisé en ce que** chaque convoyeur en boucle fermée (14', 14") est associé à au moins un dispositif de manipulation amont et au moins un dispositif de manipulation aval ayant des régions de travail respectives (22a', 26a', 22a", 26a") qui couvrent une partie d'une branche amont (14a', 14a") et une partie d'une branche aval (14b', 14b") du convoyeur en boucle fermée respectif (14', 14"),
dans lequel, en fonctionnement, lesdites positions mobiles (16', 16") de chaque convoyeur en boucle fermée (14', 14") se déplacent dans une direction (C) de sorte que les positions mobiles (16', 16") en aval du dispositif de transfert respectif (32', 32") passent d'abord par les régions de travail (26a', 26a") de l'au moins un dispositif de manipulation aval respectif et ensuite par les régions de travail (22a', 22a") de l'au moins un dispositif de manipulation amont respectif, et où les régions de travail (22a', 26a', 22a", 26a") des dispositifs de manipulation associées à chaque convoyeur en boucle fermée (14', 14") couvrent des régions transversales respectives dans la direction transversale (W1, W2) du convoyeur d'alimentation (12) et où lesdites régions de travail (22a', 26a', 22a", 26a") couvrent ensemble toute la largeur (W) du convoyeur d'alimentation (12).

5. Dispositif selon l'une quelconque des revendications précédentes, dans lequel ledit convoyeur en boucle fermée (14) comprend une bague annulaire (18) montée en rotation autour d'un axe vertical et munie d'une pluralité de secteurs définissant lesdites positions mobiles (16).

6. Dispositif selon la revendication 5, dans lequel ladite bague annulaire (18) est munie d'une pluralité de poussoirs (20) qui s'étendent dans la direction verticale et qui définissent entre eux lesdites positions mobiles (16).

7. Dispositif selon l'une des revendications 1 à 4, dans lequel ledit convoyeur en boucle fermée (14) comprend un guide fixe (34) qui s'étend le long d'un chemin en boucle fermée et porte un élément flexible mobile muni d'une pluralité de poussoirs (36) définissant entre eux lesdites positions mobiles (16).
